# EUROPÄISCHE PATENTSCHRIFT

(11) **EP 2 603 685 B1**
(45) Veröffentlichungstag und Bekanntmachung des Hinweises auf die Patenterteilung: **09.11.2016**
(21) Anmeldenummer: 11787582.3
(22) Anmeldetag: 09.08.2011
(51) Int. Cl.: F02F 3/00, B23K 20/12, B23P 15/10, C21D 9/00, C21D 9/50, F02F 3/22, B23K 101/00

(54) **KOLBEN FÜR EINEN VERBRENNUNGSMOTOR UND VERFAHREN ZU SEINER HERSTELLUNG**
PISTON FOR AN INTERNAL COMBUSTION ENGINE AND METHOD FOR PRODUCING SAME
PISTON POUR UN MOTEUR À COMBUSTION INTERNE ET PROCÉDÉ DE FABRICATION CORRESPONDANT

(30) Priorität: 10.08.2010 DE 102010033881
(43) Veröffentlichungstag der Anmeldung: 19.06.2013
(73) Patentinhaber: MAHLE International GmbH, 70376 Stuttgart (DE)
(72) Erfinder: SCHARP, Rainer, 71665 Vaihingen (DE); KELLER, Klaus, 73547 Lorch (DE)
(74) Vertreter: Stumkat, Ulrich
(86) Internationale Anmeldenummer: PCT/DE2011/001563
(87) Internationale Veröffentlichungsnummer: WO 2012/019592

(56) Entgegenhaltungen:
- DE-A1- 10 049 786
- US-A1- 2007 079 775

## Beschreibung

Die vorliegende Erfindung betrifft ein Verfahren zur Herstellung eines Kolbens für einen Verbrennungsmotor aus einem ersten Kolbenbauteil und einem zweiten Kolbenbauteil. Die vorliegende Erfindung betrifft ferner einen Kolben für einen Verbrennungsmotor aus einem ersten Kolbenbauteil und einem zweiten Kolbenbauteil, wobei der Kolben einen Kolbenboden, einen umlaufenden Feuersteg und eine mit Ringnuten versehene umlaufende Ringpartie sowie einen Kolbenschaft aufweist.

Kolben für moderne Verbrennungsmotoren werden zunehmend auf geringeren Ölverbrauch ausgelegt. Da in modernen Verbrennungsmotoren zugleich die thermische und mechanische Belastung der Kolben zunehmend ansteigt, besteht die Gefahr, dass der Kolben im Motorbetrieb nicht ausreichend mit Öl versorgt wird. Daraus resultieren höhere tribologische Belastungen. Hieraus folgen ein verstärkter Verschleiß und damit eine Reduzierung der Lebensdauer des Kolbens. Daher wird angestrebt, Teilbereiche bzw. Teilstrukturen des Kolbens, die diesem verstärkten Verschleiß unterliegen, wie bspw. die untere Nutflanke der ersten Ringnut, zu härten, bspw. durch Nitrieren (vgl. EP 0 985 739 A1) oder mittels Laserstrahlen (vgl. DE 10 2007 006 948 A1). Diese Maßnahmen sind mit erhöhtem Aufwand und damit mit erhöhten Kosten verbunden.

Die U.S.-amerikanische Patentanmeldung US 2007/0079775 A1 offenbart einen gattungsgemäßen Kolben, bei dem zwei vorab wärmebehandelte Kolbenbauteile mittels Reibschweißen miteinander verbunden sind.

Die Aufgabe der vorliegenden Erfindung besteht darin, ein Verfahren zur Herstellung eines Kolbens derart weiterzubilden, dass eine Härtung eines Teilbereichs oder einer Teilstruktur eines Kolbens mit reduziertem Aufwand ermöglicht wird.

Die Lösung besteht darin, dass ein Verfahren mit den folgenden Schritten weiterentwickelt wird: a) Bereitstellen eines Rohlings des ersten Kolbenbauteils aus einem Vergütungsstahl oder einem ausscheidungshärtenden Stahl mit mindestens einer Fügefläche; (b) Bereitstellen eines Rohlings des zweiten Kolbenbauteils aus einem Vergütungsstahl oder einem ausscheidungshärtenden Stahl mit mindestens einer Fügefläche; (c) Vergüten oder Ausscheidungshärten der Rohlinge; (d) Verbinden des Rohlings des ersten Kolbenbauteils mit dem Rohling des zweiten Kolbenbauteils über ihre Fügeflächen mittels Reibschweißen zu einem Kolbenrohling unter Bildung mindestens einer Reibschweißnaht sowie einer Wärmeeinflusszone im Bereich der mindestens einen Reibschweißnaht; (e) Anlassen oder Spannungsarmglühen des Kolbenrohlings unter Erhalt der Wärmeeinflusszone; (f) Nachbearbeiten und/oder Fertigbearbeiten des Kolbenrohlings zu einem Kolben.

In einer ersten erfindungsgemäßen Alternative ist in Schritt (d) zumindest ein Rohling (211', 212') mit mindestens einer Ringnut (34, 36, 37) versehen, und mindestens ein Paar korrespondierender Fügeflächen (29, 32) der Rohlinge (211', 212') werden so positioniert, dass nach dem Verbinden der Rohlinge der Abstand einer unteren Nutflanke (34') einer Ringnut (34) zur Mitte der äußeren Reibschweißnaht (25, 125) kleiner ist als die axiale Höhe der Wärmeeinflusszone (30) der Reibschweißnaht.

In einer zweiten erfindungsgemäßen Alternative wird in Schritt (f) der Kolbenrohling (210') mit mindestens einer Ringnut (34, 36, 37) versehen, derart, dass der Abstand einer unteren Nutflanke (34') einer Ringnut (34) zur Mitte der äußeren Reibschweißnaht (30) kleiner ist als die axiale Höhe der Wärmeeinflusszone (30) dieser Reibschweißnaht (34).

Der erfindungsgemäße Kolben zeichnet sich dadurch aus, dass das erste Kolbenbauteil und das zweite Kolbenbauteil aus einem Vergütungsstahl oder einem ausscheidungshärtenden Stahl bestehen und durch Reibschweißen miteinander verbunden sind und dass die mindestens eine Reibschweißnaht von einer Wärmeeinflusszone umgeben ist.

Bei Vergütungsstahl oder ausscheidungshärtendem Stahl (AFP-Stahl) erfolgt durch die Reibschweißung eine Aufhärtung in der näheren Umgebung der Reibschweißnaht. Im Stand der Technik werden Rohlinge aus derartigen Stählen ggf. vorbearbeitet, in weichem Zustand durch Reibschweißen miteinander verbunden, und der resultierende Kolbenrohling wird erst anschließend vergütet. Damit wird der weiche Werkstoff gehärtet, die Aufhärtung in der näheren Umgebung der Reibschweißnaht jedoch wieder aufgehoben.

Die erfindungsgemäße Idee besteht darin, die Rohlinge zunächst zu vergüten oder einer Ausscheidungshärtung zu unterziehen, so dass sie auf die gewünschte Festigkeit gebracht werden, und im vergüteten bzw. gehärteten Zustand durch Reibschweißen miteinander zu verbinden. Auch in diesem Fall erfolgt eine Aufhärtung in der näheren Umgebung der Reibschweißnaht. Die Härte steigt in diesem Bereich um bis zu 400 HV (Vickers). Dieser aufgehärtete Bereich wird in dieser Patentanmeldung als "Wärmeeinflusszone" bezeichnet. Die Wärmeeinflusszone ist härter als der vergütete oder ausscheidungsgehärtete Werkstoff des Kolbenrohlings außerhalb der Wärmeeinflusszone. Die Reibschweißnaht wird nunmehr so positioniert, dass die einem verstärkten Verschleiß ausgesetzten Ringnuten innerhalb der Wärmeeinflusszone liegen und dadurch gehärtet werden. Dies betrifft insbesondere die untere Nutflanke der ersten Ringnut.

Unter Vergüten wird eine aus Härten und Anlassen bestehende Wärmebehandlung von Stahl verstanden, durch welche die gewünschte Härte und Festigkeit des Stahls eingestellt werden. Härten bezeichnet in diesem Zusammenhang eine Wärmebehandlung von Stahl, bestehend aus Austenitisieren und schnellem Abkühlen mit dem Ziel der Martensit- und/oder Bainitbildung. Anlassen ist jedes Erwärmen eines Werkstückes aus Stahl nach dem Härten auf Temperaturen unterhalb des unteren Umwandlungspunktes Ac1 im Eisen-Kohlenstoff-Diagramm, Halten und nachfolgendes Abkühlen. Unter Spannungsarmglühen wird eine Wärmebehandlung verstanden, durch die innere Spannungen, die beim Abkühlen eines Werkstückes auftreten, abgebaut werden.

Die in dieser Patentanmeldung verwendeten Begriffe wie Härten, Anlassen, Vergüten, Spannungsarmglühen usw. beziehen sich auf die DIN EN 10052.

Eine Vergütung nach dem Reibschweißen ist gemäß dem erfindungsgemäßen Verfahren nicht mehr erforderlich. Stattdessen wird der aus dem Reibschweißen resultierende Kolbenrohling nur noch einem Auflassen oder einem Spannungsarmglühen unterzogen, um eventuell vorhandene Spannungen abzubauen. Dabei sinkt die Härte in der Wärmeeinflusszone etwas ab, es verbleibt jedoch eine Aufhärtung mit einer Härte von bis zu 250 HV (Vickers). Die Wärmeeinflusszone im fertigen Kolben ist also ein Bereich rund um die Reibschweißnaht, der eine größere Härte aufweist als der restliche Werkstoff des Kolbens.

Diese Wärmeeinflusszone wird erfindungsgemäß zur Härtung von Nutflanken des Kolbens genutzt, die einem verstärkten Verschleiß unterliegen. Zu diesem Zweck wird die Reibschweißnaht bzw. werden die mittels Reibschweißen zu verbindenden Fügeflächen der Rohlinge der Kolbenbauteile so positioniert, dass die Nutflanken des herzustellenden Kolbens, die einem verstärkten Verschleiß unterliegen und daher gehärtet werden sollen, nach dem Reibschweißen in der Wärmeeinflusszone liegen. Damit ist es nicht mehr erforderlich, die Nutflanken einem separaten Härtungsverfahren, wie Nitrieren oder Laserstrahlbehandlung, zu unterziehen.

Die vorliegende Erfindung ist für alle anspruchsgemäßen Kolbenbauvarianten sowie für alle Kolbenbauteile geeignet, die aus einem Stahlwerkstoff bestehen, der der Vergütung bzw. Ausscheidungshärtung zugänglich ist.

Vorteilhafte Weiterbildungen ergeben sich aus den Unteransprüchen.

Die Rohlinge können geschmiedet oder gegossen sein und zweckmäßigerweise vor dem Reibschweißen vorbearbeitet werden, um Strukturen wie bspw. Nabenbohrungen, Brennraummulde und Kühlkanalteile präziser auszuformen, als es durch das Schmieden bzw. Gießen möglich ist.

Eine bevorzugte Ausführungsform besteht darin, dass die mindestens eine Reibschweißnaht so ausgebildet wird, dass sie in radialer Richtung unter einem spitzen Winkel oder unter einem stumpfen Winkel zur Kolbenmittelachse verläuft. Dadurch ist eine unterstützte Zentrierung der beiden Kolbenbauteile zu Beginn des Reibschweißvorgangs möglich. Zusätzliche Führungsflächen, Führungskanten o. dgl. sind somit nicht erforderlich.

Das erfindungsgemäße Verfahren eignet sich bspw. für Kolben, die als erstes Kolbenbauteil einen Kolbengrundkörper mit einem Kolbenschaft und als zweites Kolbenbauteil ein Kolbenringelement mit einem Kolbenboden, einem umlaufenden Feuersteg und einer mit Ringnuten versehenen umlaufenden Ringpartie aufweisen, wobei der Kolbengrundkörper und das Kolbenringelement einen umlaufenden Kühlkanal bilden. Insbesondere für derartige Kolben wird in Schritt (a) ein Rohling des Kolbengrundkörpers mit einer äußeren Fügefläche und einer inneren Fügefläche sowie einem zwischen beiden Fügeflächen umlaufenden unteren Kühlkanalteil sowie in Schritt (b) ein Rohling des Kolbenringelements mit einer äußeren Fügefläche und einer inneren Fügefläche sowie einem zwischen beiden Fügeflächen umlaufenden oberen Kühlkanaltell bereit gestellt. Der Rohling des Kolbenringelements kann eine Brennraummulde aufweisen. Stattdessen kann der Rohling des Kolbenringelements zumindest einen Wandbereich einer Brennraummulde aufweisen. In diesem Fall weist der Rohling des Kolbengrundkörpers zumindest einen Bodenbereich einer Brennraummulde auf.

Ausführungsbeispiele der vorliegenden Erfindung werden im Folgenden anhand der beigefügten Zeichnungen näher erläutert. Es zeigen in einer schematischen, nicht maßstabsgetreuen Darstellung:
- Fig. 1a: ein Ausführungsbeispiel eines erfindungsgemäßen Kolbens im Schnitt;
- Fig. 1b: eine vergrößerte Detailansicht des Kolbens gemäß Fig. 1a;
- Fig. 2a: ein weiteres Ausführungsbeispiel eines erfindungsgemäßen Kolbens im Schnitt;
- Fig. 2b: eine vergrößerte Detailansicht des Kolbens gemäß Fig. 2a;
- Fig. 3: ein Ausführungsbeispiel eines Rohlings eines Kolbengrundkörpers und eines Rohlings eines Kolbenringelements zur Herstellung eines erfindungsgemäßen Kolbens im Schnitt;
- Fig. 4: die Rohlinge gemäß Fig. 3 nach einer Vorbearbeitung;
- Fig. 5: der aus den Bauteilen gemäß Fig. 4 hergestellte Kolbenrohling für einen erfindungsgemäßen Kolben im Schnitt;
- Fig. 6: der aus dem Kolbenrohling gemäß Fig. 5 hergestellte erfindungsgemäße Kolben.

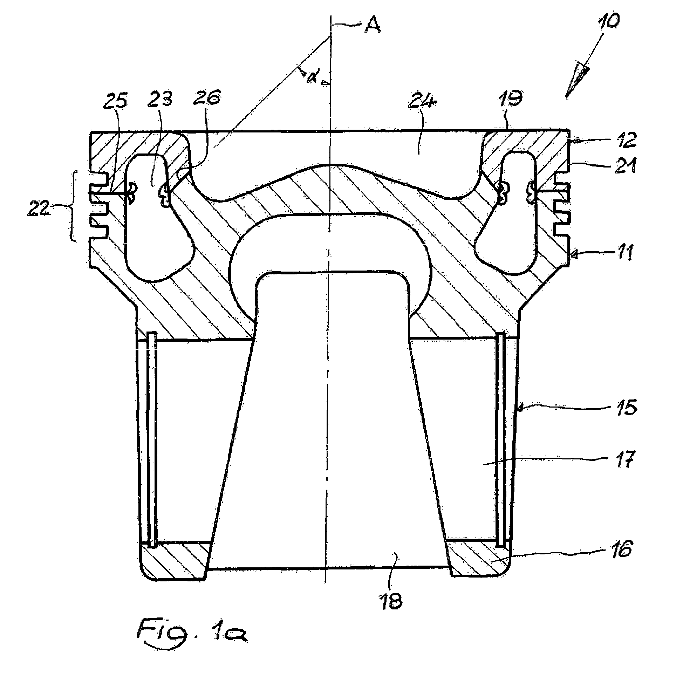

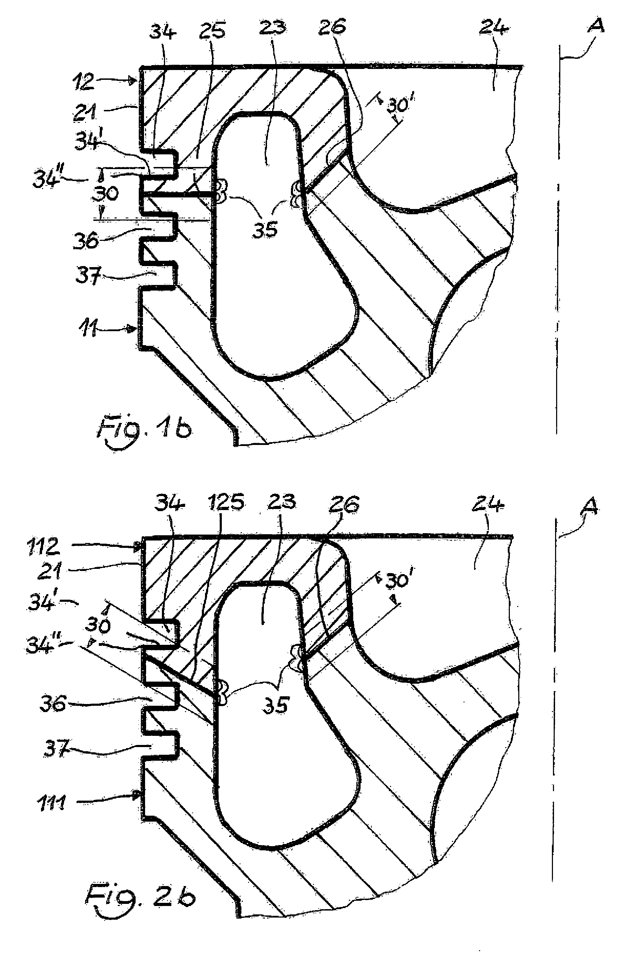

Die Figuren 1 a und 1 b zeigen ein erstes Ausführungsbeispiel eines erfindungsgemäßen Kolbens 10. Der Kolben 10 besteht aus einem Kolbengrundkörper 11 und einem Kolbenringelement 12. Beide Bauteile können aus jedem Stahlwerkstoff, bspw. gemäß DIN EN 10083 oder DIN EN 10267, bestehen, der einer Vergütung unterworfen werden kann und zum Reibschweißen geeignet ist.

Im Ausführungsbeispiel besteht der Kolbengrundkörper aus AFP-Stahl. Der Kolbengrundkörper 11 weist einen Kolbenschaft 15 auf, der in an sich bekannter Weise mit Naben 16 und Nabenbohrungen 17 zur Aufnahme eines Kolbenbolzens (nicht dargestellt) sowie Schaftbereichen 18 mit Laufflächen (nicht dargestellt) versehen ist. Das Kolbenringelement 12 ist im Ausführungsbeispiel aus 42CrMo4 hergestellt. Das Kolbenringelement 12 weist einen Kolbenboden 19 sowie einen umlaufenden Feuersteg 21 auf. Der Kolbengrundkörper 11 und das Kolbenringelement 12 bilden eine umlaufende Ringpartie 22 zur Aufnahme von Kolbenringen (nicht dargestellt), einen umlaufenden geschlossenen Kühlkanal 23 sowie eine Brennraummulde 24.

Der Kolbengrundkörper 11 und das Kolbenringelement 12 sind in an sich bekannter Weise durch Reibschweißen miteinander verbunden. Der Kolben 10 weist dementsprechend eine äußere Reibschweißnaht 25 im Bereich der Ringpartie 22 und eine innere Reibschweißnaht 26 im Bereich der Brennraummulde 24 auf. Im Ausführungsbeispiel verläuft die äußere Reibschweißnaht 25 lotrecht zur Mittelachse A des Kolbens 10, während die innere Reibschweißnaht 26 in einem spitzen Winkel α zur Mittelachse A verläuft. Der Verlauf der inneren Reibschweißnaht 26 erlaubt ein unterstützendes Zentrieren des Kolbenringelements 12 auf dem Kolbengrundkörper 11. Hinsichtlich des Verlaufs der Reibschweißnähte sind selbstverständlich beliebige andere Lage- und Winkelkombinationen der Reibschweißnähte möglich.

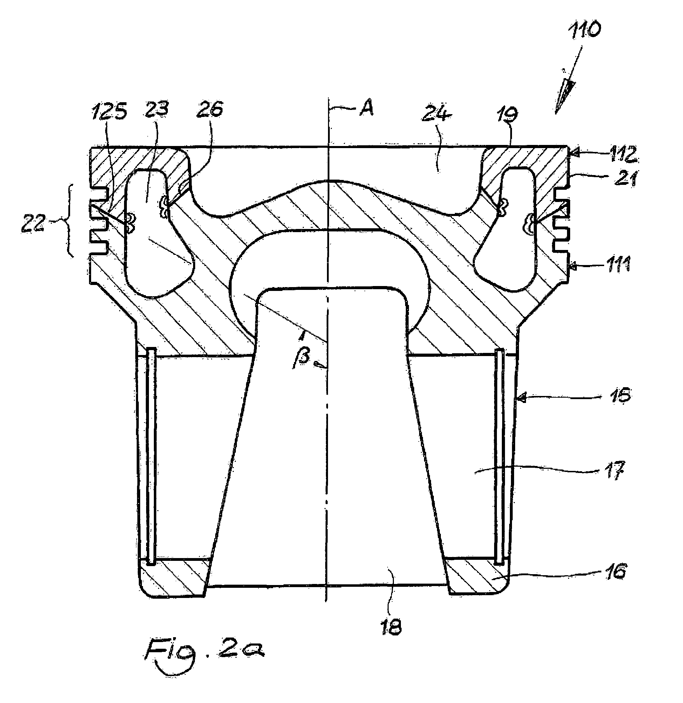

Die Figuren 2a und 2b zeigen ein weiteres Ausführungsbeispiel eines erfindungsgemäßen Kolbens 110 aus einem Kolbengrundkörper 111 und einem Kolbenringelement 211. Der Kolben 110 entspricht im Wesentlichen dem Kolben 10 gemäß der Figuren 1 a und 1 b, so dass übereinstimmende Strukturelemente mit den gleichen Bezugszeichen versehen sind und diesbezüglich auf die obige Beschreibung zu den Figuren 1a und 1 b verwiesen wird. Der einzige Unterschied besteht darin, dass die äußere Reibschweißnaht 125 in einem stumpfen Winkel β zur Mittelachse A des Kolbens 110 verläuft. In Kombination mit der Reibschweißnaht 26, die in einem spitzen Winkel α zur Mittelachse A verläuft, erlaubt diese Lage- und Winkelkombinationen der Reibschweißnähte ein besonders zuverlässiges unterstützendes Zentrieren des Kolbenringelements 12 auf dem Kolbengrundkörper 11.

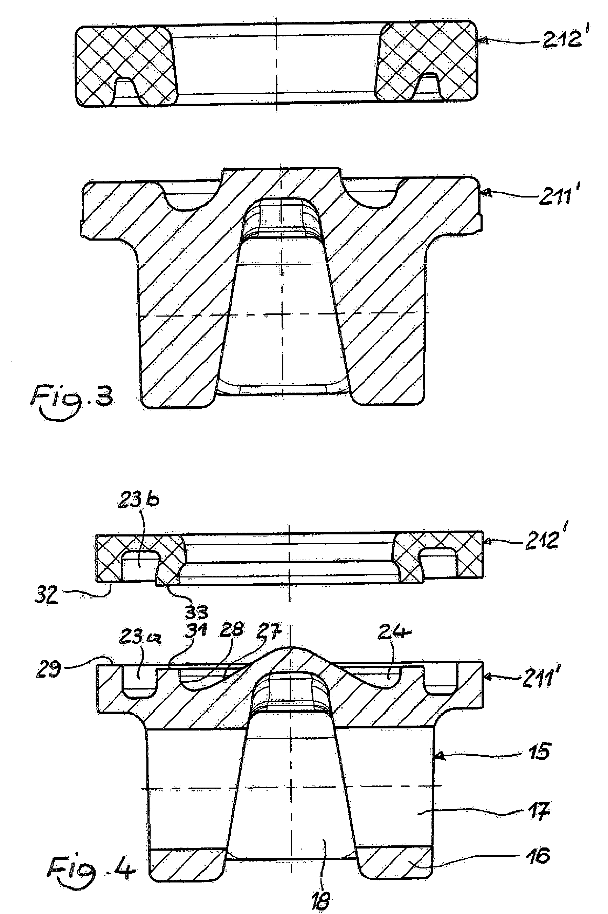

Die Figuren 3 bis 6 zeigen ein weiteres Ausführungsbeispiel eines erfindungsgemäßen Kolbens 210 sowie ein Ausführungsbeispiel eines erfindungsgemäßen Herstellungsverfahrens für alle Ausführungsbeispiele des erfindungsgemäßen Kolbens 10, 110, 210. Der Kolben 210 entspricht im Wesentlichen dem Kolben 10 gemäß der Figuren 1a und 1b, so dass übereinstimmende Strukturetemente mit den gleichen Bezugszeichen versehen sind und diesbezüglich auf die obige Beschreibung zu den Figuren 1a und 1 b verwiesen wird. Der einzige Unterschied besteht darin, dass die innere Reibschweißnaht 226 lotrecht β zur Mittelachse A des Kolbens 210 verläuft.

Die erfindungsgemäßen Kolben 10, 110, 210 werden auf die nachfolgend beschriebene Weise hergestellt. Das Herstellungsverfahren wird für den Kolben 210 beschrieben, jedoch gilt die Beschreibung für die Kolben 10, 110 entsprechend.

Gemäß Figur 3 wird zunächst ein Rohling 211' des Kolbengrundkörpers 211 sowie ein Rohling 212' des Kolbenringelements 212 bereitgestellt, bspw. mittels Schmieden oder Gießen oder Sintern. Im Ausführungsbeispiel sind Ringpartie, Kühlkanal, Brennraummulde, Kolbennaben und Nabenbohrungen nicht oder nicht vollständig ausgearbeitet. Das Kolbenoberteil kann auch mittels Ringwalzen oder durch Abtrennen von einem Rohr hergestellt werden.

Die Rohlinge 211', 212' werden nach dem Gießen bzw. Schmieden in an sich bekannter Weise durch Vergütung oder Ausscheidungshärtung auf gewünschte Festigkeit eingestellt.

Für die Vergütung gelten die Richtangaben der DIN EN 10083: Für 42CrMo4: Austenitisieren bei 850°C, Härten/Abschrecken in Öl, Anlassen bei 600°C; Ausscheidungshärtung 38MnVS6: Lösungsglühen bei ca. 1280 °C, Umformen bis ca. 1000°C, dann kontrollierte Luftabkühlung auf <600°C). Nach der Wärmebehandlung weisen die Rohlinge 211' 212' eine Härte von 240 - 360 HV (Vickers) auf.

Im Ausführungsbeispiel werden die Rohlinge 211', 212' nach der Wärmebehandlung gemäß Figur 4 vorbearbeitet.

In den Rohling 211' des Kolbengrundkörpers 211 wird im Ausführungsbeispiel der Bodenbereich 27 sowie ein Teil eines Wandbereichs 28 der Brennraummulde 24 eingearbeitet, bspw. eingedreht. Ferner werden die Naben 16 und Nabenbohrungen 17 sowie die Schaftbereiche 18 mit den Laufflächen eingearbeitet. Schließlich wird ein umlaufender unterer Kühlkanalteil 23a des Kühlkanals 23 eingearbeitet. Daraus ergeben sich eine äußere Fügefläche 29 und eine innere Fügefläche 31. In den Rohling 212' des Kolbenringelements 212 wird im Ausführungsbeispiel der verbleibende Teil 28' des Wandbereichs der Brennraummulde 24 eingearbeitet, bspw. eingedreht. Ferner wird ein umlaufender oberer Kühlkanalteil 23b des Kühlkanals 23 eingearbeitet. Daraus ergeben sich eine äußere Fügefläche 32 und eine innere Fügefläche 33.

Die äußere Fügefläche 29 des Rohlings 211' korrespondiert mit der äußere Fügefläche 32 des Rohlings 212'. In entsprechender Weise korrespondiert die innere Fügefläche 31 des Rohlings 211' mit der inneren Fügefläche 33 des Rohlings 212'. Das bedeutet, dass die beiden Rohlinge 211', 212' entlang ihrer Fügefächen 29, 31 bzw. 32, 33 miteinander zu einem Kolbenrohling 210' verbunden werden können. Zum Verbinden der beiden Rohlinge 211', 212' werden diese in an sich bekannter Weise fluchtend gespannt, wobei durch die gewählten Schweißnahtlagen eine unterstützende Zentrierung erfolgen kann. Das Verschweißen der Teile erfolgt dann über das hinreichend aus dem Stand der Technik bekannte Schwungrad-Reibschweißen.

Durch den Reibschweißvorgang bildet sich rund um die entstandenen Reibschweißnähte 25, 226 jeweils eine Wärmeeinflusszone 30, 30', wie sie in den Figuren 1b und 2b dargestellt sind. Die Wärmeeinflusszonen erstrecken sich oberhalb und unterhalb der Reibschweißnähte 25, 26, 125, 226 über jeweils etwa 1 bis 3 mm. Im Bereich der Wärmeeinflusszonen 30, 30' ist die Härte um bis zu 400 HV (Vickers) gegenüber dem vergüteten Werkstoff der Rohlinge 211' 212' außerhalb der Wärmeeinflusszonen 30, 30' erhöht. Das heißt, im Bereich der Wärmeeinflusszonen 30, 30' treten maximale Härten von ca. 600 bis 800 HV (Vickers) auf.

Der resultierende Kolbenrohling 210' wird im Ausführungsbeispiel nach dem Reibschweißen einer Wärmebehandlung, nämlich einem Anlassen oder einem Spannungsarmglühen, unterzogen, bevorzugt 1 h bei 550°C. Diese Wärmebehandlung führt dazu, dass die Härte des Werkstoffs in den Wärmeeinflusszonen 30, 30' um etwa 200 HV (Vickers) reduziert wird. Das heißt, im Bereich der Wärmeeinflusszonen 30,30' reduziert sich die maximale Härte auf ca. 400 bis 600 HV (Vickers). Die restlichen Bereiche erfahren durch die Wärmebehandlung keine Härteänderung. Somit bleibt ein dauerhafter Härteunterschied zwischen den härteren Wärmeeinflusszonen 30, 30' und dem restlichen Werkstoff der Rohlinge 211' 212' erhalten.

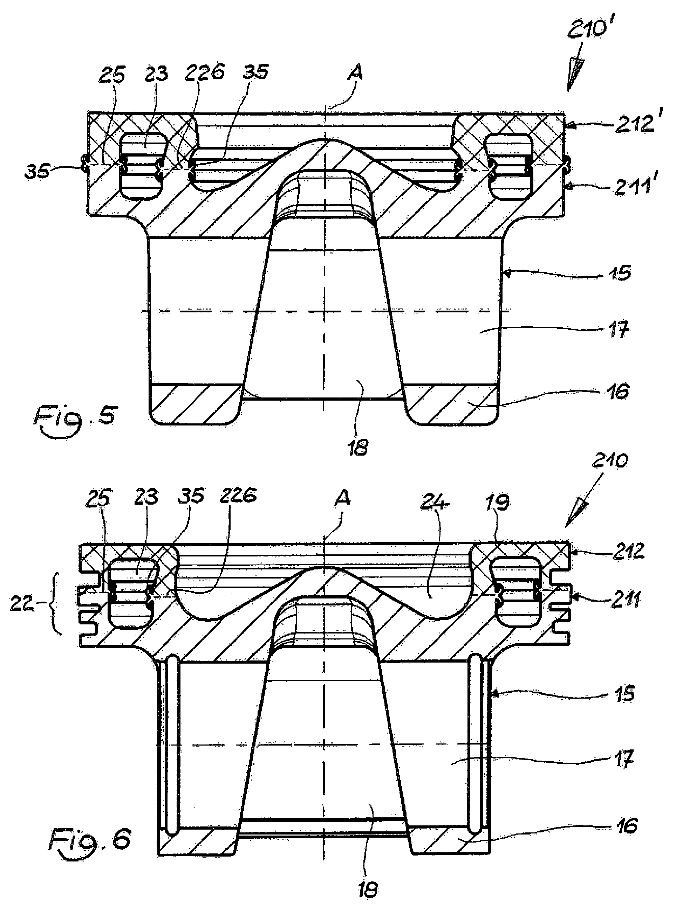

Der Kolbenrohling 210' gemäß Figur 5 weist als Ergebnis des oben beschriebenen Reibschweißvorgangs entlang der äußeren Reibschweißnaht 25 und entlang der inneren Reibschweißnaht 226 Reibschweißwulste 35 auf. Der Kolbenrohling 210' wird in an sich bekannter Weise, abhängig von der Ausbildung der Rohlinge 211', 212', nachgearbeitet bzw. fertigbearbeitet. Bspw. können Außenform, Oberflächen, Brennraummulde, Nabenbohrungen, etc. fertig bearbeitet werden, und die zugänglichen Reibschweißwulste 35 werden entfernt. Erfindungsgemäße werden die Ringpartie 22 mit Ringnuten 34, 36, 37 (vgl. Figuren 1b, 2b) eingearbeitet, derart, dass die untere Nutflanke 31' der ersten Ringnut 34 im Bereich der Wärmeeinflusszone 30 positioniert wird und der Abstand der unteren Nutflanke 34' der Ringnut 34 zur Mitte der äußeren Reibschweißnaht 25, 125 kleiner ist als die axiale Höhe der Wärmeeinflusszone 30 (vgl. Figuren 1b und 2b). Im Ergebnis ist die untere Nutflanke 34' gehärtet, insbesondere im Bereich ihrer Außenkante 34". Die Härte der Nutflanke liegt nun bei ca. 400 bis 600 HV (Vickers), was erfindungsgemäß einer Steigerung der Härte um ca. 100 bis 200 HV (Vickers) entspricht und zu einer Verbesserung der Verschleißbeständigkeit führt. Letztendlich erhält man einen fertigen Kolben 210 gemäß. Figur 6. Selbstverständlich kann auch jede andere Ringnut 36, 37 auf diese Weise gehärtet werden. Gleiches gilt für andere Teilbereiche und Teilstrukturen des erfindungsgemäßen Kolbens 10, 110, 210, die einer Härtung unterzogen werden sollen. Derartige Teilbereiche und Teilstrukturen sollten nach dem Reibschweißen im Bereich der Wärmeeinflusszonen 30, 30' liegen.

## Patentansprüche

1. Verfahren zur Herstellung eines Kolbens (10, 110, 210) für einen Verbrennungsmotor aus einem ersten Kolbenbauteil (11, 111, 211) und einem zweiten Kolbenbauteil (12, 112, 212), **gekennzeichnet durch** folgende Verfahrensschritte:
(a) Bereitstellen eines Rohlings (211') des ersten Kolbenbauteils (11, 111,211) aus einem Vergütungsstahl oder einem ausscheidungshärtenden Stahl mit mindestens einer Fügefläche (29, 31),
(b) Bereitstellen eines Rohlings (212') des zweiten Kolbenbauteils (12, 112, 212) aus einem Vergütungsstahl oder einem ausscheidungshärtenden Stahl mit mindestens einer Fügefläche (32, 33),
(c) Vergüten oder Ausscheidungshärten der Rohlinge (211', 212'),
(d) Verbinden des Rohlings (211') des ersten Kolbenbauteils (11, 111, 211) mit dem Rohling (212') des zweiten Kolbenbauteils (12, 112, 212) über ihre Fügeflächen (29, 31, 32, 33) mittels Reibschweißen zu einem Kolbenrohling (210') unter Bildung mindestens einer Reibschweißnaht (25, 26, 125, 226) sowie einer Wärmeeinflusszone (30, 30') im Bereich der mindestens einen Reibschweißnaht (25, 26, 125, 226), wobei zumindest ein Rohling (211', 212') mit mindestens einer Ringnut (34, 36, 37) versehen ist und mindestens ein Paar korrespondierender Fügeflächen (29, 32) der Rohlinge (211', 212') so positioniert werden, dass nach dem Verbinden der Rohlinge der Abstand einer unteren Nutflanke (34') einer Ringnut (34) zur Mitte der äußeren Reibschweißnaht (25, 125) kleiner ist als die axiale Höhe der Wärmeeinflusszone (30) der Reibschweißnaht,
(e) Anlassen oder Spannungsarmglühen des Kolbenrohlings (210) unter Erhalt der Wärmeeinflusszone(n) (30, 30'),
(f) Nachbearbeiten und/oder Fertigbearbeiten des Kolbenrohlings (210') zu einem Kolben (10, 110, 210).

2. Verfahren zur Herstellung eines Kolbens (10, 110, 210) für einen Verbrennungsmotor aus einem ersten Kolbenbauteil (11, 111, 211) und einem zweiten Kolbenbauteil (12, 112, 212), **gekennzeichnet durch** folgende Verfahrensschritte:
(a) Bereitstellen eines Rohlings (211') des ersten Kolbenbauteils (11, 111,211) aus einem Vergütungsstahl oder einem ausscheidungshärtenden Stahl mit mindestens einer Fügefläche (29, 31),
(b) Bereitstellen eines Rohlings (212') des zweiten Kolbenbauteils (12, 112, 212) aus einem Vergütungsstahl oder einem ausscheidungshärtenden Stahl mit mindestens einer Fügefläche (32, 33),
(c) Vergüten oder Ausscheidungshärten der Rohlinge (211', 212'),
(d) Verbinden des Rohlings (211') des ersten Kolbenbauteils (11, 111, 211) mit dem Rohling (212') des zweiten Kolbenbauteils (12, 112, 212) über ihre Fügeflächen (29, 31, 32, 33) mittels Reibschweißen zu einem Kolbenrohling (210') unter Bildung mindestens einer Reibschweißnaht (25, 26, 125, 226) sowie einer Wärmeeinflusszone (30, 30') im Bereich der mindestens einen Reibschweißnaht (25, 26, 125, 226),
(e) Anlassen oder Spannungsarmglühen des Kolbenrohlings (210) unter Erhalt der Wärmeeinflusszone(n) (30, 30'),
(f) Nachbearbeiten und/oder Fertigbearbeiten des Kolbenrohlings (210') zu einem Kolben (10, 110, 210), wobei der Kolbenrohling (210') mit mindestens einer Ringnut (34, 36, 37) versehen wird, derart, dass der Abstand einer unteren Nutflanke (34') einer Ringnut (34) zur Mitte der äußeren Reibschweißnaht (30) kleiner ist als die axiale Höhe der Wärmeeinflusszone (30) dieser Reibschweißnaht (34).

3. Verfahren nach Anspruch 1 oder 2, **dadurch gekennzeichnet, dass** die Rohlinge (211', 212') zwischen Schritt (c) und Schritt (d) vorbearbeitet werden.

4. Verfahren nach Anspruch 1 oder 2, **dadurch gekennzeichnet, dass** die mindestens eine Reibschweißnaht (26, 125) so ausgebildet wird, dass sie in radialer Richtung unter einem spitzen Winkel (α) oder unter einem stumpfen Winkel (β) zur Kolbenmittelachse (A) verläuft.

5. Verfahren nach Anspruch 1 oder 2, **dadurch gekennzeichnet, dass** in Schritt (a) ein Rohling (211') eines Kolbengrundkörpers (11, 111, 211) mit einer äußeren Fügefläche (29) und einer inneren Fügefläche (31) sowie einem zwischen beiden Fügeflächen (29, 31) umlaufenden unteren Kühlkanalteil (23a) bereit gestellt wird und dass in Schritt (b) ein Rohling (212') eines Kolbenringelements (12, 112, 212) mit einer äußeren Fügefläche (32) und einer inneren Fügefläche (33) sowie einem zwischen beiden Fügeflächen (32, 33) umlaufenden oberen Kühlkanalteil (23b) bereit gestellt wird.

6. Verfahren nach Anspruch 5, **dadurch gekennzeichnet, dass** ein Rohling (212') eines Kolbenringelements (12, 112, 212) verwendet wird, welcher eine Brennraummulde (24) aufweist.

7. Verfahren nach Anspruch 5, **dadurch gekennzeichnet, dass** ein Rohling (12') eines Kolbenringelements (12, 112, 212) verwendet wird, welcher zumindest einen Wandbereich (28') einer Brennraummulde (24) aufweist und dass ein Rohling (211') eines Kolbengrundkörpers (11, 111, 211) verwendet wird, welcher zumindest einen Bodenbereich (27) einer Brennraummulde (24) aufweist.

8. Kolben (10, 110, 210) für einen Verbrennungsmotor aus einem ersten Kolbenbauteil (11, 111, 211) und einem zweiten Kolbenbauteil (12, 112, 212), wobei der Kolben (10, 110, 210) einen Kolbenboden (19), einen umlaufenden Feuersteg (21) und eine mit Ringnuten (34, 36, 37) versehene umlaufende Ringpartie (22) sowie einen Kolbenschaft (15) aufweist, **dadurch gekennzeichnet, dass** das erste Kolbenbauteil (11, 111, 211) und das zweite Kolbenbauteil (12, 112, 212) aus einem Vergütungsstahl oder einem ausscheidungshärtenden Stahl bestehen und durch Reibschweißen miteinander verbunden sind und dass die mindestens eine Reibschweißnaht (25, 26, 125, 226) von einer Wärmeeinflusszone (30, 30') umgeben ist, wobei die mindestens eine Reibschweißnaht (25, 125) so positioniert ist, dass der Abstand einer unteren Nutflanke (34') einer Ringnut (34) zur Mitte der Reibschweißnaht (25, 125) kleiner ist als die axiale Höhe der Wärmeeinflusszone (30) der Reibschweißnaht (25, 125).

9. Kolben nach Anspruch 8, **dadurch gekennzeichnet, dass** die mindestens eine Reibschweißnaht (26, 125) so ausgebildet ist, dass sie in radialer Richtung lotrecht oder unter einem spitzen Winkel (α) oder unter einem stumpfen Winkel (β) zur Kolbenmittelachse (A) verläuft.

10. Kolben nach Anspruch 8, **dadurch gekennzeichnet, dass** das erste Kolbenbauteil ein Kolbengrundkörper (11, 111, 211) ist, der zumindest einen Kolbenschaft (15) aufweist, dass das zweite Kolbenbauteil ein Kolbenringelement (12, 112, 212) ist, das zumindest einen Kolbenboden (19), einen umlaufenden Feuersteg (21) und eine mit Ringnuten (34, 36, 37) versehene umlaufende Ringpartie (22) aufweist und dass der Kolbengrundkörper (11) und das Kolbenringelement (12) einen umlaufenden Kühlkanal (23) bilden.

11. Kolben nach Anspruch 8, **dadurch gekennzeichnet, dass** das Kolbenringelement (12) eine Brennraummulde (24) aufweist.

12. Kolben nach Anspruch 8, **dadurch gekennzeichnet, dass** das Kolbenringelement (12, 112, 212) zumindest einen Wandbereich (28') einer Brennraummulde (24) aufweist und dass der Kolbengrundkörper (11, 111, 211) zumindest einen Bodenbereich (27) einer Brennraummulde (24) aufweist.

## Claims

1. A method for producing a piston (10, 110, 210) for an internal combustion engine composed of a first piston component (11, 111, 211) and a second piston component (12, 112, 212), **characterized by** the following method steps;
(a) providing a blank (211') of the first piston component (11, 111, 211) made of a tempering steel or a precipitation-hardening steel, having at least one joining surface (29, 31);
(b) providing a blank (212') of the second piston component (12, 112, 212) made of a tempering steel or a precipitation-hardening steel, having at least one joining surface (32, 33);
(c) quenching and tempering, or precipitation-hardening, the blanks (211', 212');
(d) connecting the blank (211') of the first piston component (11, 111, 211) to the blank (212') of the second piston component (12, 112, 212) via the joining surfaces (29, 31, 32, 33) thereof by way of friction welding to form a piston blank (210'), forming at least one friction welding seam (25, 26, 125, 226) and a heat affected zone (30, 30') in the region of the at least one friction welding seam (25, 26, 125, 226), wherein at least one blank (211', 212') is provided with at least one annular groove (34, 36, 37), and at least one pair of corresponding joining surfaces (29, 32) of the blanks (211', 212') is positioned in such a way that, after the blanks have been connected, the distance between a lower groove flank (34') of an annular groove (34) and the center of the outer friction welding seam (25, 125) is smaller than the axial height of the heat affected zone (30) of the friction welding seam;
(e) tempering or stress relief annealing the piston blank (210), preserving the heat affected zone(s) (30, 30');
(f) post-treating and/or finishing the piston blank (210') to obtain a piston (10, 110, 210).

2. A method for producing a piston (10, 110, 210) for an internal combustion engine composed of a first piston component (11, 111, 211) and a second piston component (12, 112, 212), **characterized by** the following method steps:
(a) providing a blank (211') of the first piston component (11, 111, 211) made of a tempering steel or a precipitation-hardening steel, having at least one joining surface (29, 31);
(b) providing a blank (212') of the second piston component (12, 112, 212) made of a tempering steel or a precipitation-hardening steel, having at least one joining surface (32, 33);
(c) quenching and tempering, or precipitation-hardening, the blanks (211', 212');
(d) connecting the blank (211') of the first piston component (11, 111, 211) to the blank (212') of the second piston component (12, 112, 212) via the joining surfaces (29, 31, 32, 33) thereof by way of friction welding to form a piston blank (210'), forming at least one friction welding seam (25, 26, 125, 226) and a heat affected zone (30, 30') in the region of the at least one friction welding seam (25, 26, 125, 226);
(e) tempering or stress relief annealing the piston blank (210), preserving the heat affected zone(s) (30, 30');
(f) post-treating and/or finishing the piston blank (210') to obtain a piston (10, 110, 210), wherein the piston blank (210') is provided with at least one annular groove (34, 36, 37) in such a way that the distance between a lower groove flank (34') of an annular groove (34) and the center of the outer friction welding seam (30) is smaller than the axial height of the heat affected zone (30) of this friction welding seam (34).

3. The method according to claim 1 or 2, **characterized in that** the blanks (211', 212') are pre-worked between step (c) and step (d).

4. The method according to claim 1 or 2, **characterized in that** the at least one friction welding seam (26, 125) is designed so as to run in the radial direction at an acute angle (α) or at an obtuse angle (β) to the piston center axis (A).

5. The method according to claim 1 or 2, **characterized in that**, in step (a), a blank (211') of a piston base body (11, 111, 211) having an outer joining surface (29) and an inner joining surface (31) and a lower cooling duct section (23a) extending around the periphery between the two joining surfaces (29, 31) is provided, and in step (b), a blank (212') of a piston ring element (12, 112, 212) having an outer joining surface (32) and an inner joining surface (33) and an upper cooling duct section (34b) extending around the periphery between the two joining surfaces (32, 33) is provided.

6. The method according to claim 5, **characterized in that** a blank (212') of a piston ring element (12, 112, 212) is used which comprises a combustion chamber bowl (24).

7. The method according to claim 5, **characterized in that** a blank (12') of a piston ring element (12, 112, 212) is used which comprises at least one wall region (28') of a combustion chamber bowl (24), and a blank (211') of a piston base body (11, 111, 211) is used which comprises at least one bottom region (27) of a combustion chamber bowl (24).

8. A piston (10, 110, 210) for an internal combustion engine composed of a first piston component (11, 111, 211) and a second piston component (12, 112, 212), the piston (10, 110, 210) comprising a piston crown (19), a peripheral top land (21), and a peripheral annular section (22) provided with annular grooves (34, 36, 37) and a piston skirt (15), **characterized in that** the first piston component (11, 111, 211) and the second piston component (12,112, 212) are made of a tempering steel or a precipitation-hardening steel and connected to each other by way of friction welding, and the at least one friction welding seam (25, 26, 125, 226) is surrounded by a heat affected zone (30, 30'), the at least one friction welding seam (25, 125) being positioned in such a way that the distance between a lower groove flank (34') of an annular groove (34) and the center of the friction welding seam (25, 125) is smaller than the axial height of the heat affected zone (30) of the friction welding seam (25, 125).

9. The piston according to claim 8, **characterized in that** the at least one friction welding seam (26, 125) is designed so as to run in the radial direction perpendicularly or at an acute angle (α) or at an obtuse angle (β) to the piston center axis (A).

10. The piston according to claim 8, **characterized in that** the first piston component is a piston base body (11, 111, 211), which comprises at least one piston skirt (15), the second piston component is a piston ring element (12, 112, 212), which comprises at least one piston crown (19), a peripheral top land (21), and a peripheral annular section (22) provided with annular grooves (34, 36, 37), and the piston base body (11) and the piston ring element (12) form a peripheral cooling duct (23).

11. The piston according to claim 8, **characterized in that** the piston ring element (12) comprises a combustion chamber bowl (24).

12. The piston according to claim 8, **characterized in that** the piston ring element (12, 112, 212) comprises at least one wall region (28') of a combustion chamber bowl (24), and the piston base body (11, 111, 211) comprises at least one bottom region (27) of a combustion chamber bowl (24).

## Revendications

1. Procédé de fabrication d'un piston (10, 110, 210) pour un moteur à combustion interne à partir d'un premier composant de piston (11, 111, 211) et d'un deuxième composant de piston (12, 112, 212), **caractérisé par** les étapes de procédé suivantes :
(a) mise au point d'une ébauche (211') du premier composant de piston (11, 111, 211) à partir d'un acier de traitement thermique ou d'un acier durci par précipitation avec au moins une surface d'assemblage (29, 31),
(b) mise au point d'une ébauche (212') du deuxième composant de piston (12, 112, 212) à partir d'un acier de traitement thermique ou d'un acier durci par précipitation avec au moins une surface d'assemblage (32, 33),
(c) traitement thermique ou durcissement par précipitation des ébauches (211', 212'),
(d) jonction de l'ébauche (211') du premier composant de piston (11, 111, 211) avec l'ébauche (212') du deuxième composant de piston (12, 112, 212) par leurs surfaces d'assemblage (29, 31, 32, 33) au moyen d'un soudage par friction pour former une ébauche de piston (210'), moyennant la formation d'au moins un cordon de soudure par friction (25, 26, 125, 126), ainsi qu'une zone sous influence thermique (30, 30') dans la région de l'au moins un cordon de soudure par friction (25, 26, 125, 226), où au moins une ébauche (211', 212') est munie d'une rainure annulaire (34, 36, 37) et au moins une paire de surfaces d'assemblage (29, 32) correspondantes des ébauches (211', 212') est positionnée de telle sorte qu'après la jonction des ébauches, la distance de l'un des flancs de rainure inférieur (34') d'une rainure annulaire (34) vers le milieu du cordon de soudure par friction (25, 125) extérieur est inférieure à la hauteur axiale de la zone sous influence thermique (30) du cordon de soudure par friction,
(e) revenu ou recuit de détente de l'ébauche de piston (210) moyennant le maintien de la (des) zone(s) sous influence thermique (30, 30'),
(f) reprise et/ou parachèvement de l'ébauche de piston (210') pour former un piston (10, 110, 210).

2. Procédé de fabrication d'un piston (10, 110, 210) pour un moteur à combustion interne à partir d'un premier composant de piston (11, 111, 211) et d'un deuxième composant de piston (12, 112, 212), **caractérisé par** les étapes de procédé suivantes :
(a) mise au point d'une ébauche (211') du premier composant de piston (11, 111, 211) à partir d'un acier de traitement thermique ou d'un acier durci par précipitation avec au moins une surface d'assemblage (29, 31),
(b) mise au point d'une ébauche (212') du deuxième composant de piston (12, 112, 212) à partir d'un acier de traitement thermique ou d'un acier durci par précipitation avec au moins une surface d'assemblage (32, 33),
(c) traitement thermique ou durcissement par précipitation des ébauches (211', 212'),
(d) jonction de l'ébauche (211') du premier composant de piston (11, 111, 211) avec l'ébauche (212') du deuxième composant de piston (12, 112, 212) par leurs surfaces d'assemblage (29, 31, 32, 33) au moyen d'un soudage par friction pour former une ébauche de piston (210'), moyennant la formation d'au moins un cordon de soudure par friction (25, 26, 125, 126), ainsi qu'une zone sous influence thermique (30, 30') dans la région de l'au moins un cordon de soudure par friction (25, 26, 125, 226),
(e) revenu ou recuit de détente de l'ébauche de piston (210) moyennant le maintien de la (des) zone(s) sous influence thermique (30, 30'),
(f) reprise et/ou parachèvement de l'ébauche de piston (210') pour former un piston (10, 110, 210), où l'ébauche de piston (210') est munie d'une rainure annulaire (34, 36, 37) de telle sorte que la distance de l'un des flancs de rainure inférieur (34') d'une rainure annulaire (34) vers le milieu du cordon de soudure par friction (30) extérieur est inférieure à la hauteur axiale de la zone sous influence thermique (30) de ce cordon de soudure par friction (34).

3. Procédé selon la revendication 1, ou 2, **caractérisé en ce que** les ébauches (211', 212') sont prétraitées entre l'étape (c) et l'étape (d).

4. Procédé selon la revendication 1, ou 2, **caractérisé en ce que** l'au moins un cordon de soudure par friction (26, 125) est conçu de telle manière qu'il s'étend en direction radiale en faisant un angle aigu (α) ou un angle obtus (β) par rapport à l'axe central de piston (A).

5. Procédé selon la revendication 1, ou 2, **caractérisé en ce que** dans l'étape (a), une ébauche (211') d'un corps de base de piston (11, 111, 211) est mise au point avec une surface d'assemblage (29) extérieure et une surface d'assemblage (31) intérieure, ainsi qu'une partie de canal de refroidissement (23a) inférieure circonférentielle entre les deux surfaces d'assemblage (29, 31) et que dans l'étape (b), une ébauche (212') d'un élément annulaire de piston (12, 112, 212) est mise au point avec une surface d'assemblage (32) extérieure et une surface d'assemblage (33) intérieure, ainsi qu'une partie de canal de refroidissement (23b) supérieure circonférentielle entre les deux surfaces d'assemblage (32, 33).

6. Procédé selon la revendication 5, **caractérisé en ce qu'**une ébauche (212') d'un élément annulaire de piston (12, 112, 212) est employée, lequel présente une cuvette de chambre de combustion (24).

7. Procédé selon la revendication 5, **caractérisée en ce qu'**une ébauche (12') d'un élément annulaire de piston (12, 112, 212) est employé, lequel présente au moins une région de paroi (28') d'une cuvette de chambre de combustion (24) et qu'une ébauche (211') d'un corps de base de piston (11, 111, 211) est employée, lequel présente au moins une région de fond (27) d'une cuvette de chambre de combustion (24).

8. Piston (10, 110, 210) pour un moteur à combustion interne constitué d'un premier composant de piston (11, 111, 211) et d'un deuxième composant de piston (12, 112, 212), où le piston (10, 110, 210) présente un fond de piston (19), un cordon de feu (21) circonférentiel et une partie annulaire (22) circonférentielle munie de rainures annulaires (34, 36, 37), ainsi qu'une tige de piston (15), **caractérisé en ce que** le premier composant de piston (11, 111, 211) et le deuxième composant de piston (12, 112, 212) sont constitués en un acier de traitement thermique ou un acier durci par précipitation et sont joints ensemble par un soudage par friction et que l'au moins un cordon de soudure par friction (25, 26, 125, 126) est entouré d'une zone sous influence thermique (30, 30'), où l'au moins un cordon de soudure par friction (25, 125) est positionnée de telle manière que la distance d'un flanc de rainure (34') inférieur d'une rainure annulaire (34) vers le milieu du cordon de soudure par friction (25, 125) est inférieure à la hauteur axiale de la zone sous influence thermique (30) du cordon de soudure par friction (25, 125).

9. Piston selon la revendication 8, **caractérisée en ce que** l'au moins un cordon de soudure par friction (26, 125) est conçu qu'il s'étend en direction radiale de manière perpendiculaire ou sous un angle aigu (α) ou sous un angle obtus (β) par rapport à l'axe central de piston (A).

10. Piston selon la revendication 8, **caractérisé en ce que** le premier composant de piston est un corps de base de piston (11, 111, 211) qui présente au moins une tige de piston (15), de sorte que le deuxième composant de piston est un élément annulaire de piston (12, 112, 212) qui présente au moins un fond de piston (19), un cordon de feu (21) circonférentiel et une partie annulaire (22) circonférentielle munie de rainures annulaires (34, 36, 37) et que le corps de base de piston (11) et l'élément annulaire de piston (12) forment un canal de refroidissement (23) circonférentiel.

11. Piston selon la revendication 8, **caractérisé en ce que** l'élément annulaire de piston (12) présente une cuvette de chambre de combustion (24).

12. Piston selon la revendication 8, **caractérisé en ce que** l'élément annulaire de piston (12, 112, 212) présente au moins une région de paroi (28') d'une cuvette de chambre de combustion (24) et que le corps de base de piston (11, 111, 211) présente au moins une région de fond (27) d'une cuvette de chambre de combustion (24).
